(19) Europäisches Patentamt
European Patent Office
Office européen des brevets

(11) **EP 4 696 734 A1**

(12) **EUROPEAN PATENT APPLICATION**
published in accordance with Art. 153(4) EPC

(43) Date of publication:
**18.02.2026 Bulletin 2026/08**

(21) Application number: **24788947.0**

(22) Date of filing: **02.04.2024**

(51) International Patent Classification (IPC):
**C08G 63/183** (2006.01)   **C08G 63/78** (2006.01)
**C08J 11/10** (2006.01)   **C08J 5/18** (2006.01)

(52) Cooperative Patent Classification (CPC):
**Y02W 30/62**

(86) International application number:
**PCT/KR2024/004247**

(87) International publication number:
**WO 2024/215004 (17.10.2024 Gazette 2024/42)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **11.04.2023 KR 20230047347**

(71) Applicant: **SK Chemicals Co., Ltd.
Seongnam-si, Gyeonggi-do 13494 (KR)**

(72) Inventors:
• **PARK, Jun-Yong
Seongnam-si, Gyeonggi-do 13494 (KR)**

• **KIM, Sung-Gi
Seongnam-si, Gyeonggi-do 13494 (KR)**
• **KIM, Jong-Gyu
Seongnam-si, Gyeonggi-do 13494 (KR)**
• **KIM, Ji-Hun
Seongnam-si, Gyeonggi-do 13494 (KR)**
• **PARK, Kwang-Woo
Seongnam-si, Gyeonggi-do 13494 (KR)**
• **PARK, Ji Hye
Seongnam-si, Gyeonggi-do 13494 (KR)**
• **LEE, Joong Ki
Seongnam-si, Gyeonggi-do 13494 (KR)**

(74) Representative: **Dehns
10 Old Bailey
London EC4M 7NG (GB)**

(54) **RECYCLED POLYESTER RESIN AND FILM AND METHODS FOR MANUFACTURING SAME**

(57)    This polyester resin, in which the amounts of cyclic trimers and diethylene glycol are adjusted within specific ranges, has excellent heat resistance and excellent processibility, and can improve the strength, elongation and hydrolysis resistance of a polyester film manufactured from the polyester resin.

**EP 4 696 734 A1**

**Description**

**Technical Field**

Embodiments relate to a recycled polyester resin, to a film, and to a process for preparing the same.

**Background Art**

Polyester is widely used as a material for beverage-filling containers, packaging films, audio and video films, and the like by virtue of its excellent mechanical strength, heat resistance, transparency, and gas barrier properties. In addition, polyester is widely produced worldwide as an industrial material such as medical fibers and tire cords. In particular, polyester sheets or plates have good transparency and excellent mechanical strength, so that they are widely used as raw materials for cases, boxes, partitions, shelves, panels, packaging materials, building materials, interior and exterior materials, and the like.

As a result, waste of plastics such as polyester is generated globally at an unmanageable level every year. Recently, countries around the world have prepared regulations and plans for recycling waste plastic resources, including waste polyester. For example, there is an attempt to use a recycled resin in packaging materials used in various fields at a certain ratio or more. Although physical or chemical methods are used as methods of recycling waste polyester, physical recycling methods cannot guarantee purity and, therefore, are not widely used.

In chemical recycling methods, the ester bond of waste polyester is cleaved to depolymerize it. Reactions such as glycolysis, hydrolysis, methanolysis, and aminolysis are used. Glycolysis among them is to decompose waste polyester by adding a glycol such as ethylene glycol or diethylene glycol at high temperatures. A reaction product containing mainly bis(2-hydroxyethyl) terephthalate (BHET) is obtained. The bis(2-hydroxyethyl) terephthalate may be used as a raw material for preparing unsaturated polyester or ester polyol after the crystallization or purification thereof.

[Prior Art Document]

(Patent Document 1) Korean Patent No. 1386683
(Patent Document 2) U.S. Patent No. 7211193

**Disclosure of Invention**

**Technical Problem**

In general, a product of the depolymerization reaction of a waste polyester resin comprises a significant amount of oligomers such as dimers and trimers in addition to bis(2-hydroxyethyl) terephthalate (BHET). It is inevitable to contain side reactants such as diethylene glycol (DEG) formed from the high depolymerization temperatures. In particular, since oligomers are always present in a certain amount at an equilibrium concentration with the polymer during the preparation process, it is difficult to control and reduce their content. These substances cause deterioration of the appearance, performance, and processibility of a final product.

Accordingly, the present inventors have controlled the recycled raw materials and the polycondensation process to produce a recycled polyester resin in which the content of cyclic trimers and diethylene glycol is adjusted to a specific range. The heat resistance, processibility, and mechanical properties of a polyester film produced therefrom are confirmed to be enhanced.

Accordingly, an object of the present invention is to provide a polyester film having the above composition, a polyester film comprising the same and having excellent characteristics, and a process for preparing the same.

**Solution to Problem**

The present invention provides a polyester resin, which comprises recycled bis(2-hydroxyethyl) terephthalate obtained by the depolymerization of waste polyester, wherein the peak area fraction of a cyclic trimer measured by high-performance liquid chromatography (HPLC) is 3,000 ppm or less, and the content of diethylene glycol (DEG) measured by gas chromatography (GC) is 1.0% by weight or less.

In addition, the present invention provides a polyester film, which comprises the polyester resin.

In addition, the present invention provides a process for preparing a polyester film, which comprises (1) depolymerizing waste polyester to prepare recycled bis(2-hydroxyethyl) terephthalate; (2) mixing the recycled bis(2-hydroxyethyl) terephthalate with a solvent to prepare a solution of recycled bis(2-hydroxyethyl) terephthalate; (3) preparing a polyester resin through a polycondensation reaction using the recycled bis(2-hydroxyethyl) terephthalate solution; and (4) melt-extruding the polyester resin and stretching the extrudate, wherein, in the polyester resin, the peak area fraction of a cyclic trimer measured by high-performance liquid chromatography (HPLC) is 3,000 ppm or less, and the content of diethylene glycol (DEG) measured by gas chromatography (GC) is 1.0% by weight or less.

## Advantageous Effects of Invention

In the polyester resin according to the present invention, the content of cyclic trimers and diethylene glycol is adjusted to a specific range. As a result, it is possible to enhance the heat resistance, processibility, and mechanical properties of a polyester film produced therefrom. In addition, in the polyester resin according to the present invention, the concentration of carboxyl end groups is adjusted to a specific range to enhance the hydrolysis resistance of a final product.

Accordingly, a film comprising the polyester resin of the present invention exhibits excellent properties in terms of strength, elongation, and elongation retention rate under high-temperature and high-humidity conditions.

Accordingly, the polyester resin and film of the present invention can exhibit quality and performance equivalent to virgin products even though they are products recycled through chemical recycling.

## Best Mode for Carrying out the Invention

In this specification, terms referring to the respective components are used to distinguish them from each other and are not intended to limit the scope of the embodiment. In addition, in the present specification, a singular expression is interpreted to cover a plural number as well unless otherwise specified in the context.

In the present specification, the terms first, second, and the like are used to describe various components. But the components should not be limited by the terms. The terms are used for the purpose of distinguishing one element from another.

In the present specification, the term "comprising" is intended to specify a particular characteristic, region, step, process, element, and/or component. It does not exclude the presence or addition of any other characteristic, region, step, process, element and/or component, unless specifically stated to the contrary.

The molecular weight of a compound or polymer described in the present specification, for example, a number average molecular weight or a weight average molecular weight, is a relative mass based on carbon-12 as is well known. Although its unit is not described, it may be understood as a molar mass (g/mole) of the same numerical value, if necessary.

In the numerical range that limits the size of components, physical properties, and the like described in the present specification, when a numerical range limited with the upper limit only and a numerical range limited with the lower limit only are separately exemplified, it should be understood that a numerical range combining these upper and lower limits is also encompassed in the exemplary scope.

The polyester resin according to an embodiment comprises recycled bis(2-hydroxyethyl) terephthalate obtained by the depolymerization of waste polyester, wherein the peak area fraction of a cyclic trimer measured by high-performance liquid chromatography (HPLC) is 3,000 ppm or less, and the content of diethylene glycol (DEG) measured by gas chromatography (GC) is 1.0% by weight or less.

Hereinafter, the present invention will be described in more detail.

## Recycled bis(2-hydroxyethyl) terephthalate

The polyester resin according to the present invention comprises bis(2-hydroxyethyl) terephthalate obtained by the depolymerization of waste polyester.

Bis(2-hydroxyethyl) terephthalate is an ester of two ethylene glycol molecules and one terephthalic acid molecule. For example, it is a compound formed as an intermediate in the process of preparing a polyester such as polyethylene terephthalate (PET) through the polymerization of ethylene glycol and terephthalic acid or its ester.

Bis(2-hydroxyethyl) terephthalate (BHET), which is used as a polymerization raw material for the polyester resin according to the present invention, is obtained from waste polyester having a repeat unit of ethylene glycol and terephthalic acid like polyethylene terephthalate (PET) or glycol-modified polyethylene terephthalate (PETG). For example, it may be obtained by well-known depolymerization methods such as glycolysis, hydrolysis, and methanolysis.

In the present specification, bis(2-hydroxyethyl) terephthalate (BHET) obtained by the depolymerization of waste polyester as described above is referred to as "recycled bis(2-hydroxyethyl) terephthalate (recycled BHET)," or abbreviated as r-BHET or rBHET, which needs to be understood as distinct from a pure BHET compound.

The recycled BHET may contain reagents or solvents used in various chemical steps during the depolymerization of waste polyester, or by-products formed by side reactions with them. These impurities may remain in trace amounts even after several rounds of purification. Thus, recycled BHET generally contains trace amounts of organic and inorganic impurities in addition to BHET as the main component. For this reason, recycled BHET can also be viewed as a kind of composition comprising two or more components, i.e., a BHET composition. It may be used as a polymerization raw material for producing a polyester resin.

Specifically, recycled BHET may comprise trace amounts of a heterogeneous organic component, such as BHET analogs such as monohydroxyethyl terephthalic acid (MHET), BHET dimers, BHET trimers, by-products such as diethylene glycol esters, metal ions as inorganic components, and residual solvent components in addition to BHET as the main component.

In the present invention, recycled BHET in which the content of such heterogeneous organic components is adjusted to a certain range is used. The content of each component in recycled BHET can be derived by measuring the fraction (%) of a peak area out of the total peak area in a spectrum obtained using high-performance liquid chromatography (HPLC).

Specifically, the recycled bis(2-hydroxyethyl) terephthalate (BHET) as a raw material in the present invention has a peak area fraction of BHET of 96% or more when measured by high-performance liquid chromatography (HPLC). More specifically, the peak area fraction of BHET measured by HPLC may be 96.5% or more, 97% or more, 97.5% or more, or 98% or more.

In addition, the recycled bis(2-hydroxyethyl) terephthalate may have a peak area fraction of organic impurities measured by HPLC of less than 5% in total, specifically, less than 4%, less than 3%, less than 2%, less than 1%, or less than 0.7%.

In particular, the polyester resin according to the present invention comprises recycled BHET in which the content of diethylene glycol esters (DEG esters) is adjusted to a certain level or less. For example, the recycled bis(2-hydroxyethyl) terephthalate may have a peak area fraction of diethylene glycol ester compounds of less than 2% in total when measured by HPLC. Specifically, the peak area fraction of diethylene glycol ester compounds may be less than 1.5%, less than 1%, less than 0.8%, or less than 0.7%, in total.

As an example, the diethylene glycol ester compounds may be a condensate between an aromatic dicarboxylic acid such as terephthalic acid and diethylene glycol. As another example, the diethylene glycol ester compounds may be a condensate between an aromatic dicarboxylic acid such as terephthalic acid and a glycol (e.g., ethylene glycol) in addition to diethylene glycol.

According to an embodiment, the recycled BHET may comprise 2-hydroxyethyl[2-(2-hydroxyethoxy)ethyl] terephthalate (CAS No. 65133-69-9) as a first diethylene glycol ester. According to another embodiment, the recycled BHET may comprise bis[2-(2-hydroxyethoxy)ethyl]benzene-1,4-dicarboxylate (CAS No. 26850-76-0) as a second diethylene glycol ester. If a polyester resin is prepared from recycled BHET in which the contents of the first diethylene glycol ester and the second diethylene glycol ester are adjusted to a certain level or less, even though it is a polyester resin regenerated through chemical recycling, it is hardly deteriorated in quality as compared with a virgin resin.

According to an embodiment, the recycled bis(2-hydroxyethyl) terephthalate (BHET) has a peak area fraction of 2-hydroxyethyl[2-(2-hydroxyethoxy)ethyl] terephthalate (first diethylene glycol ester) of 2.5% or less when measured by high-performance liquid chromatography (HPLC). Specifically, the peak area fraction of 2-hydroxyethyl[2-(2-hydroxyethoxy)ethyl] terephthalate measured by HPLC may be 2.0% or less, 1.5% or less, 1.0% or less, or 0.5% or less.

According to another embodiment, the recycled bis(2-hydroxyethyl) terephthalate (BHET) has a peak area fraction of bis[2-(2-hydroxyethoxy)ethyl]benzene-1,4-dicarboxylate (second diethylene glycol ester) of 0.5% or less when measured by high-performance liquid chromatography (HPLC). Specifically, the peak area fraction of bis[2-(2-hydroxyethoxy)ethyl]benzene-1,4-dicarboxylate measured by HPLC may be 0.2% or less, more specifically, 0.15% or less, 0.1% or less, or 0.05% or less.

In addition, the recycled bis(2-hydroxyethyl) terephthalate may have a peak area fraction of oligomers of 3% or less in total when measured by high-performance liquid chromatography.

Specifically, the recycled bis(2-hydroxyethyl) terephthalate may have a peak area fraction of BHET dimers of less than 3%, less than 2%, less than 1%, or less than 0.7%, when measured by HPLC. In addition, the bis(2-hydroxyethyl) terephthalate produced by the above process may have a peak area fraction of BHET trimers measured by HPLC of less than 1%, less than 0.5%, less than 0.3%, less than 0.1%, or 0%.

In addition, the recycled bis(2-hydroxyethyl) terephthalate may further comprise impurities having a structure similar to that of bis(2-hydroxyethyl) terephthalate. For example, it may comprise at least one selected from the group consisting of monohydroxyethyl terephthalic acid (MHET), bis(2-hydroxypropyl) terephthalate, and monohydroxyethylethoxy terephthalic acid. The impurities having a structure similar to that of bis(2-hydroxyethyl) terephthalate may have a peak area fraction of less than 3%, less than 2%, less than 1%, or less than 0.5%, when measured by HPLC.

In addition, the total content of residual solvents (e.g., ethylene glycol) in the recycled bis(2-hydroxyethyl) terephthalate may be less than 1% by weight based on a weight ratio detected by gas chromatography analysis. Specifically, the total content of the oligomer-type materials may be less than 0.5% by weight, less than 0.3% by weight, less than 0.2% by weight, less than 0.1% by weight, or less than 0.9% by weight.

In addition, the recycled bis(2-hydroxyethyl) terephthalate may have a yellow index (YID) of 3.0 or less as measured with a spectrophotometer in a solution of 25% by weight. Specifically, the yellow index may be 2.5 or less, 2.0 or less, 1.5 or less, or 1.0 or less.

In addition, the recycled bis(2-hydroxyethyl) terephthalate may have a total content of inorganic substances of less than 5 ppm as measured by inductively coupled plasma atomic emission spectroscopy (ICP-AES). Specifically, the total content of inorganic substances may be less than 3 ppm, less than 1 ppm, or nearly 0 ppm.

**Polyester resin**

The polyester resin of the present invention is a polyester resin regenerated through the chemical recycling of waste polyester.

Specifically, since the polyester resin of the present invention is polymerized using recycled BHET, it comprises a repeat unit derived from recycled BHET in the polymer chain.

The content of recycled BHET in the polyester resin of the present invention may be 1% by weight or more, 5% by weight or more, 10% by weight or more, 30% by weight or more, 50% by weight or more, 70% by weight or more, or 90% by weight or more. In addition, the content of recycled BHET may be 100% by weight or less, 99% by weight or less, 80% by weight or less, 60% by weight or less, 40% by weight or less, or 20% by weight or less.

As an example, the recycled bis(2-hydroxyethyl) terephthalate may be employed in an amount of 10% by weight to 99% by weight based on the weight of the polyester resin.

Meanwhile, since bis(2-hydroxyethyl) terephthalate has a structure in which two ethylene glycol molecules and one terephthalic acid molecule are bonded, the polyester resin of the present invention may essentially comprise a repeat unit derived from ethylene glycol and terephthalic acid.

As described above, the polyester resin of the present invention comprises a diacid component and a glycol component as monomers constituting the same. In addition, the polyester resin of the present invention may further comprise an additional diacid component and an additional glycol component for the polymerization of polyester.

In the polyester resin of the present invention, the diacid component may be a dicarboxylic acid or a derivative thereof, and the glycol component may be a diol.

In particular, the dicarboxylic acid comprises terephthalic acid, and the physical properties such as heat resistance, chemical resistance, and weatherability of a polyester resin can be enhanced by terephthalic acid. For example, terephthalic acid may be employed in an amount of 5% by mole to 100% by mole based on the number of moles of the entire dicarboxylic acid. In addition, the terephthalic acid component may be formed from a terephthalic acid alkyl ester such as dimethyl terephthalic acid.

In addition, the diol comprises ethylene glycol, and ethylene glycol may contribute to enhancing the transparency and impact resistance of a polyester resin. For example, ethylene glycol may be employed in an amount of 5% by mole to 100% by mole based on the number of moles of the entire diol.

According to an embodiment, the polyester resin of the present invention may be a copolymerized resin comprising two or more dicarboxylic acid components and/or two or more diol components.

Specifically, the dicarboxylic acid component may further comprise an aromatic dicarboxylic acid component, an aliphatic dicarboxylic acid component, or a mixture thereof, other than terephthalic acid. The dicarboxylic acid other than terephthalic acid may be employed in an amount of 1% by mole to 30% by mole based on the weight of the entire dicarboxylic acid components.

The aromatic dicarboxylic acid component may be an aromatic dicarboxylic acid having 8 to 20 carbon atoms, preferably, 8 to 14 carbon atoms, or a mixture thereof. Examples of the aromatic dicarboxylic acid include isophthalic acid, naphthalenedicarboxylic acids such as 2,6-naphthalenedicarboxylic acid, diphenyl dicarboxylic acid, 4,4'-stilbendicarboxylic acid, 2,5-furandicarboxylic acid, 2,5-thiophenedicarboxylic acid, and the like, but it is not limited thereto.

The aliphatic dicarboxylic acid component may be an aliphatic dicarboxylic acid having 4 to 20 carbon atoms, preferably, 4 to 12 carbon atoms, or a mixture thereof. Examples of the aliphatic dicarboxylic acid include linear, branched, or cyclic aliphatic dicarboxylic acid components such as cyclohexanedicarboxylic acids such as 1,4-cyclohexanedicarboxylic acid and 1,3-cyclohexanedicarboxylic acid, phthalic acid, sebacic acid, succinic acid, isodecylsuccinic acid, maleic acid, fumaric acid, adipic acid, glutaric acid, azelaic acid, and the like, but it is not limited thereto.

In addition, the diol component may further comprise a comonomer other than ethylene glycol. The comonomer may comprise, for example, at least one selected from the group consisting of cyclohexanedimethanol, cyclohexanedimethanol derivatives, isosorbide, and diethylene glycol.

The cyclohexanedimethanol (e.g., 1,2-cyclohexanedimethanol, 1,3-cyclohexanedimethanol, and 1,4-cyclohexanedimethanol) may contribute to enhancing the transparency and impact resistance of a polyester resin produced. For example, cyclohexanedimethanol may be employed in an amount of 5% by mole to 90% by mole based on the number of moles of the entire diol. The cyclohexanedimethanol derivative may be 4-(hydroxymethyl)cyclohexylmethyl-4-(hydroxymethyl)cyclohexanecarboxylate or 4-(4-(hydroxymethyl)cyclohexylmethoxymethyl)cyclohexylmethanol. The cyclohexanedimethanol derivatives may be employed in an amount of 0.1% by mole to 25% by mole based on the number of moles of the entire diol.

Isosorbide may enhance the processability of a final polyester resin. Although the transparency and impact resistance of a polyester resin are enhanced by the diol component of cyclohexanedimethanol and ethylene glycol, shear fluidization characteristics should be improved and the crystallization rate should be delayed for processability; however, it is difficult to achieve this effect with cyclohexanedimethanol and ethylene glycol alone. Thus, if isosorbide is employed as a diol component, the shear fluidization characteristics are improved and the crystallization rate is delayed while transparency and impact resistance are maintained, whereby it is possible to improve the processability of a polyester resin produced. Preferably, isosorbide may be employed in an amount of 0.1% by mole to 50% by mole based on the number of moles of the entire diol.

As a specific example, the polyester resin comprises a diacid component and a glycol component, wherein the diacid component may comprise at least one selected from the group consisting of terephthalic acid, isophthalic acid, dimethyl isophthalate, phthalic acid, dimethyl phthalate, phthalic anhydride, 2,6-naphthalenedicarboxylic acid, dimethyl 2,6-naphthalenedicarboxylate, diphenyl dicarboxylic acid, 1,4-cyclohexanedicarboxylic acid, 1,3-cyclohexanedicarboxylic acid, dimethyl 1,4-cyclohexanedicarboxylate, dimethyl 1,3-cyclohexanedicarboxylate, sebacic acid, succinic acid, isodecylsuccinic acid, maleic acid, maleic anhydride, fumaric acid, adipic acid, glutaric acid, and azelaic acid, and the glycol component may comprise at least one selected from the group consisting of isosorbide, ethylene glycol, 1,2-propanediol, 1,3-propanediol, 2-methyl-1,3-propanediol, 2-methylene-1,3-propanediol, 2-ethyl-1,3-propanediol, 2-isopropyl-1,3-propanediol, 2,2-dimethyl-1,3-propanediol, 1,4-butanediol, 2,3-butanediol, 3-methyl-1,5-pentanediol, 3-methyl-2,4-pentanediol, 1,6-hexanediol, 1,2-cyclohexanediol, 1,4-cyclohexanediol, diethylene glycol, 4-(hydroxymethyl)cyclohexylmethyl-4-(hydroxymethyl)cyclohexanecarboxylate, and 4-(4-(hydroxymethyl)cyclohexylmethoxymethyl)cyclohexylmethanol.

In the polyester resin according to the present invention, the content of cyclic trimers and diethylene glycol is adjusted to a specific range. As a result, it is possible to enhance the heat resistance, processability, and mechanical properties of a polyester film produced therefrom.

The content of cyclic trimers in the polyester resin according to the present invention may be measured using liquid chromatography or the like. Specifically, the content of cyclic trimers may be calculated by measuring the fraction (ppm) of the peak area of cyclic trimers out of the total peak area in a spectrum obtained using high-performance liquid chromatography (HPLC).

For example, in the polyester resin according to the present invention, the peak area fraction of a cyclic trimer measured by high-performance liquid chromatography (HPLC) may be 9,000 ppm or less, 7,000 ppm or less, or 5,000 ppm or less.

According to an embodiment, in the polyester resin according to the present invention, the peak area fraction of a cyclic trimer measured by high-performance liquid chromatography (HPLC) may be 3,000 ppm or less. Within the above range, the processability of a polyester resin and a film prepared therefrom can be further enhanced, and heat resistance and mechanical properties may be excellent.

For example, the peak area fraction of a cyclic trimer measured by HPLC may be 3,000 ppm or less, 2,900 ppm or less, 2,800 ppm or less, 2,700 ppm or less, or 2,600 ppm or less. Meanwhile, the lower limit of the peak area fraction of a cyclic trimer is not particularly limited, but it may be, for example, 0 ppm or more, 1 ppm or more, 10 ppm or more, 100 ppm or more, or 1,000 ppm or more.

The cyclic trimer may be produced in the process for preparing a polyester resin from waste polyester through a chemical recycling process. It causes deterioration in the quality of a final product.

The cyclic trimer may be a cyclic trimer composed of any one of the repeat units constituting a polyester resin.

For example, the repeat unit of the cyclic trimer may comprise an aliphatic alkylene group and an aromatic dicarboxylate group.

As a specific example, the cyclic trimer may be, for example, an ethylene terephthalate cyclic trimer.

As a more specific example, the cyclic trimer may comprise an ethylene terephthalate cyclic trimer.

Such a cyclic trimer is easily extracted or precipitated on the surface during the process for preparing a polyester resin or a film, causing problems in the process or deteriorating the appearance or performance of a final product. However, when the content thereof is adjusted to the above level, such problems can be resolved.

In addition, in the polyester resin of the present invention, the concentration of diethylene glycol measured by, for example, gas chromatography may be 2.5% by weight or less, 1.5% by weight or less, 1.2% by weight or less, 1.0% by weight or less, 0.9% by weight or less, or 0.8% by weight or less.

According to an embodiment, in the polyester resin, the content of diethylene glycol measured by gas chromatography may be 1.0% by weight or less. Within the above content range, the melting point of the polyester resin, and the heat resistance, mechanical properties, and processability of a film prepared therefrom, can be enhanced.

Meanwhile, the lower limit of the content of diethylene glycol is not particularly limited, but it may be, for example, 0% by weight or more, 0.01% by weight or more, 0.1% by weight or more, or 0.3% by weight or more.

In the polyester resin according to the present invention, the concentration of carboxyl end groups (-COOH) is adjusted to a specific range, whereby the hydrolysis resistance of the polyester resin and a film prepared therefrom can be enhanced, and heat resistance and mechanical properties may be excellent.

For example, when the polyester resin is dissolved in benzyl alcohol at 180°C and titrated using a 0.1 N sodium hydroxide-benzyl alcohol solution, the concentration of carboxyl end groups (E) calculated by the following Equation (1) may be 40 eq/ton or less, 30 eq/ton or less, or 20 eq/ton or less.

As a specific example, when the polyester resin is dissolved in benzyl alcohol at 180°C and titrated using a 0.1 N sodium hydroxide-benzyl alcohol solution, the concentration of carboxyl end groups (E) calculated by the following Equation (1) may be 20 eq/ton or less.

$$E = \frac{(S - B) \times N \times f}{W} \times 1{,}000 \quad (1)$$

Here, S is the volume (L) of the 0.1 N sodium hydroxide-benzyl alcohol solution consumed in the titration of the polyester resin, B is the volume (L) of the 0.1 N sodium hydroxide-benzyl alcohol solution consumed in the blank titration, N is the concentration of the sodium hydroxide-benzyl alcohol solution, which is 0.1 N, W is the weight (kg) of the polyester resin used for titration, and f is a factor of the 0.1 N sodium hydroxide-benzyl alcohol solution, which is 0.95 to 0.99.

Specifically, the concentration of carboxyl end groups may be 20 eq/ton or less, 19 eq/ton or less, 18 eq/ton or less, 16 eq/ton or less, or 15 eq/ton or less. Meanwhile, the lower limit of the concentration of carboxyl end groups is not particularly limited, but it may be, for example, 0 eq/ton or more, 1 eq/ton or more, 3 eq/ton or more, 5 eq/ton or more, or 10 eq/ton or more.

In addition, the polyester resin of the present invention may have a melting point (Tm) of, for example, 240°C or higher, 245°C or higher, 250°C or higher, or 255°C or higher, and may be 270°C or lower, 265°C or lower, or 260°C or lower, when measured by differential scanning calorimetry (DSC). As a specific example, the polyester resin may have a melting point of 255°C or higher when measured by differential scanning calorimetry (DSC). The melting point may be measured by, for example, a method comprising putting the polyester resin in a differential scanning calorimeter (DSC) and raising the temperature from room temperature to 280°C at a constant rate.

The intrinsic viscosity of the polyester resin according to the present invention at 35°C may be 0.5 dl/g or more, 0.6 dl/g or more, or 0.7 dl/g or more, and may be 1.2 dl/g or less, 1.1 dl/g or less, 1.0 dl/g or less, or 0.9 dl/g or less. For example, the polyester resin may have an intrinsic viscosity of 0.6 dl/g to 1.2 dl/g at 35°C. The intrinsic viscosity may be calculated, for example, by dissolving the polyester resin in a solvent such as orthochlorophenol and obtaining specific viscosity using an Ubbelohde viscometer or the like.

**Polyester film**

The present invention provides a polyester film, which comprises the polyester resin described above.

The polyester film is obtained from a polyester resin, which comprises recycled bis(2-hydroxyethyl) terephthalate obtained by the depolymerization of waste polyester, wherein the peak area fraction of a cyclic trimer measured by high-performance liquid chromatography (HPLC) is 3,000 ppm or less, and the content of diethylene glycol (DEG) measured by gas chromatography (GC) is 1.0% by weight or less.

Since the polyester film of the present invention is prepared from the polyester resin described above, it is excellent in processibility, mechanical strength, hydrolysis resistance, and heat resistance.

As an example, in the step of melt extrusion to produce a film from the polyester resin, the pressure applied to the 10-$\mu$m filter may be 100 kg/cm$^2$ or less, 90 kg/cm$^2$ or less, 80 kg/cm$^2$ or less, 70 kg/cm$^2$ or less, or 60 kg/cm$^2$ or less. In addition, in the step of stretching the polyester film, the average number of film breakages during 24 hours may be less than 1, specifically, 0.

The polyester film may have a tensile strength in the longitudinal direction (MD) of, for example, 10 kgf/mm$^2$ or more, 13 kgf/mm$^2$ or more, 14 kgf/mm$^2$ or more, 15 kgf/mm$^2$ or more, 17 kgf/mm$^2$ or more, or 19 kgf/mm$^2$ or more. In addition, the tensile strength in the longitudinal direction (MD) may be, for example, 40 kgf/mm$^2$ or less, 30 kgf/mm$^2$ or less, 25 kgf/mm$^2$ or less, or 20 kgf/mm$^2$ or less.

The polyester film may have a tensile strength in the transverse direction (TD) of, for example, 20 kgf/mm$^2$ or more, 22 kgf/mm$^2$ or more, 23 kgf/mm$^2$ or more, 24 kgf/mm$^2$ or more, or 25 kgf/mm$^2$ or more. In addition, the tensile strength in the transverse direction (TD) may be, for example, 80 kgf/mm$^2$ or less, 70 kgf/mm$^2$ or less, or 60 kgf/mm$^2$ or less.

The polyester film may have an elongation in the longitudinal direction (MD) of, for example, 100% or more, 115% or more, 120% or more, 125% or more, 130% or more, or 135% or more. In addition, the polyester film may have an elongation in the longitudinal direction (MD) of, for example, 180% or less, 170% or less, 160% or less, or 150% or less.

The polyester film may have an elongation in the transverse direction (TD) of, for example, 60% or more, 70% or more, 75% or more, or 80% or more. In addition, the polyester film may have an elongation in the transverse direction (TD) of, for example, 120% or less, 110% or less, or 100% or less.

The tensile strength and elongation may be measured by, for example, cutting the film to a width of 1.5 cm, mounting it in the longitudinal direction on clips spaced apart by 5 cm, and testing at 25°C and a tensile speed of 200 mm/minute according to ASTM D882.

As a specific example, when the polyester film is cut to a width of 1.5 cm, mounted in the longitudinal direction on clips spaced apart by 5 cm, and tested at 25°C and a tensile speed of 200 mm/minute according to ASTM D882, the tensile strength in the longitudinal direction (MD) may be 15 kgf/mm$^2$ or more, and the elongation in the longitudinal direction (MD) may be 125% or more.

In addition, the polyester film may have an elongation retention rate (R) of 30% or more, 35% or more, 40% or more, 45% or more, or 50% or more, as calculated by the following Equation (2).

As a specific example, the polyester film may have an elongation retention rate (R) of 40% or more as calculated by the following Equation (2).

$$ R = \frac{S1}{S0} \times 100 \quad (2) $$

Here, S0 is the initial elongation (%) of a polyester film sample, and S1 is the elongation (%) measured after being left for 96 hours at 121°C, 100%. R.H., and 2 atm. The elongation is measured by cutting the polyester film to a width of 1.5 cm, mounting it in the longitudinal direction on clips spaced apart by 5 cm, and testing it at 25°C and a tensile speed of 200 mm/minute according to ASTM D882.

Meanwhile, the upper limit of the elongation retention rate (R) is not particularly limited. It may be, for example, 100% or less, 80% or less, 70% or less, or 60% or less.

The process for preparing a polyester film according to an embodiment of the present invention comprises (1) depolymerizing waste polyester to prepare recycled bis(2-hydroxyethyl) terephthalate; (2) mixing the recycled bis(2-hydroxyethyl) terephthalate with a solvent to prepare a solution of recycled bis(2-hydroxyethyl) terephthalate; (3) preparing a polyester resin through a polycondensation reaction using the recycled bis(2-hydroxyethyl) terephthalate solution; and (4) melt-extruding the polyester resin and stretching the extrudate, wherein, in the polyester resin, the peak area fraction of a cyclic trimer measured by high-performance liquid chromatography (HPLC) is 3,000 ppm or less, and the content of diethylene glycol (DEG) measured by gas chromatography (GC) is 1.0% by weight or less.

The polycondensation reaction of step (3) may comprise at least one of (3a) a polycondensation reaction under a pressure of 200 mmHg to 600 mmHg (first polycondensation reaction) and (3b) a polycondensation reaction under a pressure of less than 200 mmHg (second polycondensation reaction).

As a specific embodiment, the polycondensation reaction of step (3) may comprise (3a) subjecting the recycled bis(2-hydroxyethyl) terephthalate solution to a first polycondensation reaction under a pressure of 200 mmHg to 600 mmHg to prepare an oligomer. In addition, the polycondensation reaction may further comprise, after step (3a), (3b) subjecting the oligomer to a second polycondensation under a pressure of less than 200 mmHg to prepare a polyester resin.

The process for preparing a polyester resin according to an embodiment of the present invention comprises (1) depolymerizing waste polyester to prepare recycled bis(2-hydroxyethyl) terephthalate; (2) mixing the recycled bis(2-hydroxyethyl) terephthalate with a solvent to prepare a solution of recycled bis(2-hydroxyethyl) terephthalate; (3a) subjecting the recycled bis(2-hydroxyethyl) terephthalate solution to a first polycondensation reaction under a pressure of 200 mmHg to 600 mmHg to prepare an oligomer; and (3b) subjecting the oligomer to a second polycondensation under a pressure of less than 200 mmHg to prepare a polyester resin, wherein, in the polyester resin, the peak area fraction of a cyclic trimer measured by high-performance liquid chromatography (HPLC) is 3,000 ppm or less, and the content of diethylene glycol (DEG) measured by gas chromatography (GC) is 1.0% by weight or less.

Since oligomers such as cyclic trimers are always present in a certain amount at an equilibrium concentration with the polymer during the preparation process, it is difficult to control and reduce their content. However, in the process for preparing a recycled polyester resin according to a preferred embodiment, recycled bis(2-hydroxyethyl) terephthalate is used as a main monomer (e.g., a monomer of 100%). Thus, a transesterification reaction is not carried out, and the polycondensation reaction is carried out separately under a first low vacuum and a second high vacuum. As a result, the content of cyclic trimers can be reduced to a significantly lower level than the prior art.

Hereinafter, each step of the process for preparing a polyester resin and a film according to the present invention will be described in detail.

**Preparation of waste polyester**

Waste polyester used as a raw material in the present invention may be obtained from a polyester material product discarded after use.

For example, the waste polyester may be obtained from products such as beverage bottles, fabrics, films, cases, boxes, partitions, shelves, protective panels, packaging materials, building materials, and interior and exterior materials made of various polyester materials discarded after having been used by consumers.

The waste polyester material may be pretreated before being subjected to a depolymerization step.

First, once other plastics, metals, and foreign substances mixed in the waste polyester material have been removed, it is washed and screened according to detailed characteristics such as color, if necessary.

The waste polyester material thus screened is put into a pulverizer to be pulverized into small flakes. The flakes of waste polyester thus obtained may be screened to a desired particle size or less using a mesh. The size of the mesh may be, for example, 4 mm or less, 3 mm or less, or 2 mm or less.

The screened flakes may be washed, dried by hot air or the like, and then put into a depolymerization step.

Meanwhile, the waste polyester subjected to a glycolysis reaction may have a controlled particle size. For example, the waste polyester may be pulverized by the pretreatment step as described above to have a flake shape.

Specifically, the particle diameter of the waste polyester may be 4 mm or less, 3 mm or less, 2 mm or less, or 1 mm or less. Within the above particle diameter range, a glycolysis reaction under relatively low-temperature conditions is possible. For example, the temperature condition of the first glycolysis reaction may be adjusted to 195°C or lower, 190°C or lower, 185°C or lower, or 180°C, and the temperature condition of the subsequent second glycolysis reaction may be adjusted to 160°C or lower or 150°C or lower. In addition, within the above particle diameter range, a glycolysis reaction within a relatively short period of time is possible. For example, the period of time for the first and second glycolysis reactions may be 3 hours or less, 2 hours or less, or 1 hour or less, from the point when the appropriate temperature is reached.

In addition, the waste polyester may have a fine structure like a fiber. For example, the waste polyester may be a waste fiber or a fibrous material such as a waste banner. As a specific example, the waste polyester may have a particulate or fibrous form with a particle diameter of 4 mm or less. The fiber may comprise at least one of a monofilament yarn and a multifilament yarn. The diameter of the monofilament yarn may be, for example, 0.05 denier to 100 denier and may correspond to approximately 0.001 mm to 0.1 mm. Specifically, the monofilament yarn may have a diameter of 0.05 denier to 7 denier or 7 denier to 100 denier. The diameter of the multifilament yarn may be, for example, 1 denier to 10,000 denier and may correspond to approximately 0.01 mm to 1 mm. Specifically, the multifilament yarn may have a diameter of 0.01 denier to 0.2 denier or 0.2 denier to 1 denier.

If the depolymerization is carried out as the particle diameter or diameter of waste polyester is adjusted within the specific range, solvation can be expedited even under the conditions of relatively low temperatures and short reaction time.

In particular, according to the subject invention, a two-stage glycolysis reaction (i.e., a first glycolysis reaction and a second glycolysis reaction) is carried out. If the solvation is expedited in the first glycolysis reaction, the transesterification reaction (ester exchange reaction) of the waste polyester can be performed under the conditions of lower temperatures and short reaction time in the second glycolysis reaction. Thus, it is possible to significantly reduce the concentration of diethylene glycol (DEG) naturally formed at a common glycolysis reaction temperature and to significantly reduce the content of diethylene glycol ester compounds (DEG esters) in the bis(2-hydroxyethyl) terephthalate finally prepared.

The diethylene glycol ester compounds present in bis(2-hydroxyethyl) terephthalate act as a factor that breaks the regularity of a final polymer during the subsequent polymerization of a polyester and a polyester copolymer, thereby deteriorating the thermal resistant characteristics of a final polymer such as melting point (Tm), glass transition temperature (Tg), and the like.

However, polyester resins and products manufactured using the bis(2-hydroxyethyl) terephthalate obtained according to the depolymerization process of the present invention can be polymerized into polymers without unnecessary structural defects as in the case where a virgin, non-recycled raw material is used.

**Preparation of recycled bis(2-hydroxyethyl) terephthalate**

First, waste polyester is depolymerized to prepare recycled bis(2-hydroxyethyl) terephthalate.

According to an embodiment, the recycled bis(2-hydroxyethyl) terephthalate may be prepared by a process, which comprises (1a) subjecting waste polyester to depolymerization by a first glycolysis reaction at a temperature of 180°C to 200°C to obtain a first reactant; (1b) subjecting the first reactant to depolymerization by a second glycolysis reaction at a temperature of 150°C to 170°C to obtain a second reactant; (1c) subjecting the second reactant to ion exchange through an ion-exchange resin to obtain a third reactant; (1d) removing an unreacted glycol from the third reactant through distillation at a temperature of 150°C or lower to obtain a fourth reactant; and (1e) subjecting the fourth reactant to distillation to obtain crude bis(2-hydroxyethyl) terephthalate.

According to the embodiment, as waste polyester is subjected to the pretreatment of pulverization and to a depolymerization reaction in multiple stages at low temperatures, it is possible to significantly reduce the content of glycol dimers (diethylene glycol) formed during the depolymerization reaction, so that there is an advantage in that the purity of bis(2-hydroxyethyl) terephthalate finally obtained is increased and side-reaction structures in a subsequent repolymerization into polyester are minimized.

According to an embodiment, the depolymerization comprises subjecting waste polyester to depolymerization through a first glycolysis reaction at a high temperature (180 to 200°C) to obtain a first reactant; and subjecting the first reactant to depolymerization at a low temperature (150 to 170°C) through a second glycolysis reaction to obtain a second reactant.

As is well known, the glycolysis reaction refers to a chemical reaction in which a polymer chain or the like is decomposed by a glycol. The glycol may comprise, for example, at least one selected from the group consisting of ethylene glycol, propylene glycol, and diethylene glycol.

A catalyst may be used in the glycolysis reaction. The catalyst may be a metal catalyst, for example, a metal salt catalyst or a metallic organic catalyst. Specifically, the catalyst may be an acetate, carbonate, oxide, or hydroxide of a metal, and the metal may be an alkali metal, an alkaline earth metal, or a transition metal.

As a specific example, the catalyst comprises a metal acetate or an anhydride or a hydride thereof. More specifically, it may be at least one selected from the group consisting of zinc acetate, sodium acetate, cobalt acetate, and manganese acetate, or in the form of a hydrate or anhydride thereof.

The total weight of the glycol added may be 1, 2, or 3 times the weight of the waste polyester resin or more and may be 7, 5, or 4 times or less. For example, the weight of the glycol added may be 1 to 7 times, specifically, 2 to 5 times, more specifically, 3 to 4 times, relative to the weight of the waste polyester resin.

In addition, the weight of the catalyst added may be 0.01 part by weight or more, 0.1 part by weight or more, 0.2 part by weight or more, or 0.3 part by weight or more, and may be 5 parts by weight or less, 1 part by weight or less, 0.7 part by weight or less, 0.5 part by weight or less, or 0.4 part by weight or less, relative to 100 parts by weight of the waste polyester resin. For example, the weight of the catalyst added may be 0.1 part by weight to 1 part by weight, specifically, 0.2 part by weight to 0.7 part by weight, relative to 100 parts by weight of the waste polyester resin. More specifically, the catalyst may be used in an amount of 0.2 part by weight to 0.4 part by weight relative to 100 parts by weight of the waste polyester.

The temperature during the first glycolysis reaction may be 170°C or higher, 180°C or higher, or 190°C or higher, and may be 205°C or lower, 200°C or lower, 195°C or lower, or 190°C or lower. For example, the temperature during the first glycolysis reaction may be 180°C to 200°C, specifically, 180°C to 195°C, more specifically, 180°C to 190°C.

In addition, the temperature during the second glycolysis reaction may be 140°C or higher, 150°C or higher, or 160°C or higher, and may be 170°C or lower or 160°C or lower. For example, the temperature during the second glycolysis reaction may be 150°C to 170°C, specifically, 150°C to 160°C, more specifically, 150°C to 155°C.

The period of time required for the first and second glycolysis reactions may be 1 hour or more or 2 hours or more, and may be 4 hours or less or 3 hours or less, from the point when the appropriate temperature is reached. For example, the period of time required for the first and second glycolysis reactions may be 1 hour to 4 hours, specifically, 1 hour to 3 hours, more specifically, 1 hour to 2 hours, from the point when the appropriate temperature is reached.

As a specific example, the first glycolysis reaction may be carried out at a temperature of 180°C to 190°C for 1 hour to 3 hours. In addition, the second glycolysis reaction may be carried out at a temperature of 150°C to 160°C for 1 hour to 3 hours.

As an example, the first glycolysis reaction may be carried out in the presence of a zinc acetate anhydride catalyst. As a specific example, the first glycolysis reaction may be carried out at a temperature of 180°C to 200°C for 1 hour to 3 hours in the presence of a zinc acetate anhydride catalyst. The zinc acetate anhydride may be used in an amount of 0.2 part by weight to 0.4 part by weight relative to 100 parts by weight of the waste polyester. In addition, the second glycolysis reaction may be carried out at a temperature of 140°C to 160°C for 1 hour to 3 hours upon the further addition of ethylene glycol without an additional catalyst.

The second reactant obtained through the depolymerization may then be cooled and used in the next step.

The cooling temperature may be, for example, 150°C or lower, 140°C or lower, 130°C or lower, 120°C or lower, 110°C or lower, 100°C or lower, and may be 50°C or higher, 60°C or higher, 70°C or higher, 80°C or higher, or 90°C or higher.

As an example, the cooling may be carried out through a reduced pressure flash process. Specifically, the temperature of the second reactant may be lowered by evaporating ethylene glycol by applying a vacuum through the reduced pressure flash process.

For example, the second reactant may be further subjected to a step of cooling to 120°C or lower through reduced pressure flash prior to subsequent steps. More specifically, the temperature of the second reactant may be lowered to 110°C or lower or 100°C or lower by the reduced pressure flash process.

The pressure condition of the reduced pressure flash process may be, for example, 200 Torr or less, 100 Torr or less, or 50 Torr or less, specifically, 10 Torr to 200 Torr, 10 Torr to 100 Torr, or 10 Torr to 50 Torr.

Thereafter, insoluble foreign substances may be removed from the cooled second reactant through filtration. As a specific example, prior to the ion exchange in step (1c), a step of cooling the second reactant to 120°C or lower and filtering it upon the addition of a filter aid may be further carried out. As a result, fine particles and insoluble organic substances present in the second reactant can be filtered out by solid-liquid separation.

Known ingredients such as diatomaceous earth, perlite, and asbestos powder may be used as the filter aid. For example, 0.1 part by weight to 2.0 parts by weight of the filter aid may be added to 100 parts by weight of the second reactant.

Since bis(2-hydroxyethyl) terephthalate (BHET) or oligomers obtained through the depolymerization reaction are present in a solid form at room temperature, it is difficult to separate foreign substances at room temperature. Thus, it is preferable to separate them at a temperature condition of 90°C to 150°C, more specifically, 110°C to 150°C. In addition, if the above temperature range is maintained, the removal of insoluble foreign substances may be facilitated thanks to good flowability.

Various methods and devices may be used in the removal of insoluble foreign substances through solid-liquid separation. For example, a device such as a pressurized filter, a centrifugal separator, a filter press, a belt press, or the like may be used. But it is not limited thereto as long as any method capable of separating foreign substances is used.

The second reactant, which has been depolymerized, cooled, and filtered, is subjected to ion exchange through an ion-exchange resin to obtain a third reactant.

As it is subjected to the ion exchange, ionic impurities present in the second reactant, specifically, catalysts and metallic foreign substances, may be removed.

As is well known, an ion-exchange resin refers to a resin or polymer that serves as a medium for ion exchange. The ion-exchange resin may comprise a cation-exchange resin, an anion-exchange resin, an amphoteric ion-exchange resin, a chelate resin, or the like.

The cation-exchange resin may comprise a strongly acidic cation-exchange resin having a sulfonic acid group ($-SO_3H$) and a weakly acidic cation-exchange resin having a carboxyl group (-COOH). The anion-exchange resin may comprise a strongly basic anion-exchange resin in the form of a quaternary ammonium salt and a weakly basic anion-exchange resin having a primary to tertiary amino group.

As a specific example, the ion-exchange resin may comprise at least one selected from the group consisting of a strongly acidic cation-exchange resin, a weakly acidic cation-exchange resin, and a chelate resin.

According to an embodiment, the ion exchange is carried out by adding an ion-exchange resin to the first reactant.

The weight of the ion-exchange resin added may be 1, 3, or 5 times the weight of the catalyst added in the depolymerization reaction or more, and may be 20, 15, 10, or 8 times or less. For example, the weight of the ion-exchange resin added may be 1 to 20 times, specifically, 3 to 15 times, more specifically, 5 to 8 times, relative to the weight of the catalyst added in the depolymerization reaction.

In addition, the weight of the ion-exchange resin added may be 1 part by weight or more, 3 parts by weight or more, or 5 parts by weight or more, and may be 50 parts by weight or less, 20 parts by weight or less, 15 parts by weight or less, 10 parts by weight or less, or 7 parts by weight or less, relative to 100 parts by weight of the waste polyester resin employed in the depolymerization reaction.

As a specific example, the ion-exchange resin may be used in an amount of 1 part by weight to 20 parts by weight relative to 100 parts by weight of the waste polyester.

According to another embodiment, the ion exchange is carried out by using a column containing an ion-exchange resin.

Specifically, the column may be filled with particles of an ion-exchange resin, and ion exchange may be carried out while the second reactant passes through the column.

The particle diameter of the ion-exchange resin particles may be, for example, 0.3 mm to 1.5 mm, more specifically, 0.6 mm to 0.9 mm.

The temperature for ion exchange may be, for example, 140°C or lower, 130°C or lower, 120°C or lower, 110°C or lower, 100°C or lower, and may be 50°C or higher, 60°C or higher, 70°C or higher, 80°C or higher, or 90°C or higher.

An unreacted glycol is removed from the third reactant through distillation to obtain a fourth reactant.

Since an unreacted glycol still remains in the depolymerization resultant after filtration thereof in the previous step, it is necessary to remove the same from the reactant prior to the next step.

In addition, it is necessary to perform a step of recovering an unreacted glycol for an economical depolymerization process. That is, it is possible to recover and reuse a glycol, among glycols such as ethylene glycol, propylene glycol, diethylene glycol, or the like previously employed in the depolymerization, that remains without participating in the glycolysis reaction.

The distillation to remove the unreacted glycol may be carried out by, for example, vacuum distillation. A glass distillation apparatus or a rotary evaporator may be used for this purpose.

As the vacuum distillation to remove the unreacted glycol is carried out at a temperature of 150°C or lower, the purity of BHET can be enhanced by further reducing the formation of diethylene glycol and impurities derived therefrom. For example, the vacuum distillation to remove the unreacted glycol may be carried out at a temperature of 150°C lower, 130°C lower, or 120°C lower, and 80°C higher, 90°C higher, 100°C higher, or 110°C higher. Specifically, the temperature during the distillation to remove the unreacted glycol may be 80°C to 190°C or 90°C to 150°C. As a more specific example, the distillation to remove the unreacted glycol may be carried out at a temperature of 100°C to 130°C.

The pressure during the distillation to remove the unreacted glycol may be, for example, 0.1 Torr to 200 Torr, more specifically, 0.5 Torr to 30 Torr.

The fourth reactant from which the unreacted glycol has been removed is subjected to distillation to obtain crude bis(2-hydroxyethyl) terephthalate.

Various methods may be used for the distillation, while a distillation method to make a mixture to be separated into a thin film for increasing its surface area in contact with a heat source may be used.

For example, the distillation may be carried out by thin film evaporation, falling film evaporation, or short path evaporation. For this purpose, a thin film evaporator, a falling film evaporator, and a short path evaporator may be used, respectively.

As a specific example, the distillation to obtain bis(2-hydroxyethyl) terephthalate may be carried out by thin film evaporation. Specifically, a mixture fed to the evaporator of the thin film evaporator forms a thin film on the inner wall of the thin film evaporator by the wiper rotor. Then, distillation is carried out under appropriate temperature conditions by heating. In addition, a condenser for recovering the evaporated material may be provided inside the thin film evaporator.

The thin film evaporation may be carried out by short path evaporation. Since such a short path and thin film evaporation has a short residence time and enables vacuum distillation using a high vacuum, it is possible to separate high-boiling or high-molecular-weight materials that are hardly separated by other distillation methods while minimizing the change of the reactants by heat. In addition, if the pressure inside a thin film evaporator is lowered, there is an advantage in that the vapor pressure of a material is reduced, which allows evaporation to take place at a lower temperature than its original boiling point.

As a specific example, the fourth reactant is fed to a short path and thin film evaporator, and a wiper for forming a thin film is rotated at 300 rpm or more. As a result, a vaporized material and a non-vaporized material can be separated from each other.

The internal thin film temperature of the upper thin film evaporation apparatus during the thin film evaporation may be, for example, 100°C or higher, 110°C or higher, 120°C or higher, or 125°C or higher, and may be 250°C or lower, 200°C or lower, 150°C or lower, or 135°C or lower, specifically, 150°C to 250°C, 190°C to 250°C, or 180°C to 220°C.

In addition, the internal pressure of the upper thin film evaporation apparatus during the thin film evaporation may be, for example, 0.005 Torr to 5.0 Torr, specifically, 0.05 Torr to 5.0 Torr, 0.05 Torr to 1.5 Torr, or 0.05 Torr to 1 Torr. More specifically, the distillation to obtain crude bis(2-hydroxyethyl) terephthalate may be carried out by thin film evaporation under a pressure of 0.05 Torr to 0.4 Torr.

The crude bis(2-hydroxyethyl) terephthalate is subjected to an adsorption-crystallization step to be provided as bis(2-hydroxyethyl) terephthalate with high purity and high quality.

For example, the adsorption-crystallization may be carried out by adding an adsorbent using water as a solvent, followed by filtration and crystallization.

Various solvents may be used for the adsorption-crystallization, but a solvent capable of dissolving bis(2-hydroxyethyl) terephthalate is preferably used as a solvent. As a specific example, in order to obtain the final reactant, water as a solvent is added to the crude bis(2-hydroxyethyl) terephthalate, which is dissolved by heating, and an adsorbent is added thereto, followed by subjecting the solution obtained by filtration to cooling-crystallization and final filtration. As a result, bis(2-hydroxyethyl) terephthalate with high purity can be obtained.

Water may be added in an amount of 100 parts by weight to 500 parts by weight, specifically, 200 parts by weight to 400 parts by weight, more specifically, 300 parts by weight to 350 parts by weight, relative to 100 parts by weight of the crude bis(2-hydroxyethyl) terephthalate.

In addition, the dissolution temperature may be 50°C to 95°C, specifically, 60°C to 85°C, more specifically, 70°C to 75°C.

The adsorbent added may serve to adsorb and remove other foreign substances. It may be added in an amount of 0.1 part by weight to 3 parts by weight relative to 100 parts by weight of the crude bis(2-hydroxyethyl) terephthalate. The type and form of the adsorbent are not particularly limited. For example, activated carbon may be used.

Bis(2-hydroxyethyl) terephthalate, that is, recycled BHET, finally obtained through the above steps has high purity, along with organic impurities, especially diethylene glycol and by-products derived therefrom (DEG esters or the like) or other oligomers and inorganic substances, at a certain level or less, and it has excellent color quality.

**Preparation of a solution of recycled bis(2-hydroxyethyl) terephthalate**

The recycled bis(2-hydroxyethyl) terephthalate prepared above is mixed with a solvent to prepare a solution of recycled bis(2-hydroxyethyl) terephthalate.

Examples of the solvent used for preparing the solution of recycled BHET include water, ethylene glycol, methanol, and ethanol. As a specific example, the solvent may comprise at least one of water and ethylene glycol. As a more specific example, the solvent may comprise water and ethylene glycol at the same time, in which case the mixing weight ratio of water and ethylene glycol may be 1:5 or 1:2.

The temperature (dissolution temperature) at which the recycled BHET is mixed with the solvent may be, for example, 60°C or higher, 65°C or higher, 70°C or higher, or 75°C or higher, and may be 197°C or lower, 180°C or lower, 165°C or lower, 140°C or lower, 120°C or lower, 100°C or lower, 90°C or lower, or 80°C or lower.

According to an embodiment, the temperature at which the recycled BHET is mixed with water may be 60°C to 100°C. According to another embodiment, the temperature at which the recycled BHET is mixed with ethylene glycol may be 60°C to 197°C. According to an embodiment, the temperature at which the recycled BHET is mixed with a mixed solvent of water and ethylene glycol may be 60°C to 197°C. Within the preferred temperature range, it is more advantageous for preventing the problem of deterioration in purity due to the formation of diethylene glycol esters caused by thermal decomposition at a high temperature while the recycled BHET is sufficiently dissolved.

For example, the concentration of the solution of recycled BHET may be 25% by weight or more, 35% by weight or more, 50% by weight or more, 65% by weight or more, or 75% by weight or more, and may be 99% by weight or less, 95% by weight or less, 90% by weight or less, 85% by weight or less, or 80% by weight or less. As a specific example, the concentration of the solution of recycled BHET may be 25% by weight to 99% by weight, more specifically, 50% by weight to 95% by weight. Within the above preferred range, it may be more advantageous for inducing a uniform polymerization reaction with excellent reaction efficiency. The concentration of the solution of recycled BHET may be calculated as a percentage of the weight of the recycled BHET based on the total weight of the solution (i.e., the total weight of the recycled BHET and the solvent).

**Preparation of a polyester resin**

The recycled bis(2-hydroxyethyl) terephthalate solution prepared above is used to polymerize a polyester resin.

The polymerization of the polyester resin in the present invention comprises carrying out a polycondensation reaction (first polycondensation reaction) under a low vacuum to prepare an oligomer of a low molecular weight; and subjecting the oligomer to a polycondensation reaction (second polycondensation reaction) under a high vacuum to prepare a polyester resin.

The first polycondensation reaction and the second polycondensation reaction may be carried out under a reduced pressure condition to discharge the solvent contained in the recycled bis(2-hydroxyethyl) terephthalate solution and by-products (glycols or the like) of the polycondensation reaction to the outside of the system.

The pressure during the first polycondensation reaction may be, for example, 700 mmHg or less, 600 mmHg or less, 500 mmHg or less, 400 mmHg or less, 350 mmHg or less, 300 mmHg or less, or 250 mmHg or less, and may be 160 mmHg or more, 180 mmHg or more, 200 mmHg or more, 220 mmHg or more, or 240 mmHg or more. According to an embodiment, the pressure during the first polycondensation reaction is 200 mmHg to 600 mmHg. Within the above preferred range, it may be more advantageous for sufficiently removing by-products of the polycondensation reaction under a low vacuum while maintaining the degree of vacuum during the polycondensation reaction.

In addition, the temperature during the first polycondensation reaction may be, for example, 100°C or higher, 130°C or higher, 160°C or higher, 180°C or higher, or 200°C or higher, and may be 300°C or lower, 280°C or lower, 250°C or lower, or 230°C or lower. As a specific example, the first polycondensation reaction may be carried out at a temperature of 180°C to 250°C and a pressure of 200 mmHg to 400 mmHg.

In addition, the first polycondensation reaction may be carried out until the number average molecular weight of the oligomer of a low molecular weight reaches an appropriate level. The period of time required for the first polycondensation reaction is not particularly limited, but it may be, for example, 30 minutes or more, 1 hour or more, 2 hours or more, or 3 hours or more, and may be 15 hours or less, 10 hours or less, 5 hours or less, or 4 hours or less. Specifically, it may be 1 hour to 5 hours.

The pressure during the second polycondensation reaction may be, for example, less than 200 mmHg, 150 mmHg or less, 100 mmHg or less, 50 mmHg or less, 10 mmHg or less, or 1 mmHg or less, and may be 0.001 mmHg or more, 0.01 mmHg or more, 0.1 mmHg or more, or 0.5 mmHg or more. According to an embodiment, the pressure during the second polycondensation reaction is less than 200 mmHg. Within the above preferred range, it may be more advantageous for sufficiently removing by-products of the polycondensation reaction while maintaining the degree of vacuum during the polycondensation reaction.

In addition, the temperature during the second polycondensation reaction may be, for example, 230°C or higher, 240°C or higher, 250°C or higher, or 260°C or higher, and may be 300°C or lower, 290°C or lower, 280°C or lower, or 270°C or lower. As a specific example, the second polycondensation reaction may be carried out at a temperature of 250°C to 300°C and a pressure of 0.01 mmHg to 150 mmHg. Within the above preferred range, it may be more advantageous for sufficiently removing by-products of the polycondensation reaction, thereby suppressing the yellowing of a final resin, while maintaining the degree of vacuum during the polycondensation reaction.

In addition, the second polycondensation reaction may be carried out until the number average molecular weight of the polyester resin reaches an appropriate level. The period of time required for the second polycondensation reaction is not particularly limited, but it may be, for example, 30 minutes or more, 1 hour or more, 2 hours or more, or 5 hours or more, and may be 60 hours or less, 48 hours or less, 24 hours or less, or 15 hours or less. Specifically, it may be 1 hour to 24 hours.

The process for preparing a polyester resin of the present invention may further comprise a step commonly employed in this field in addition to the steps described above.

As an example, the process for preparing a polyester resin may further comprise molding the polyester resin to form pellets after the polycondensation reaction.

As another example, the process for preparing a polyester resin may further comprise subjecting the polyester resin to a solid-state polymerization after the polycondensation reaction. The temperature during the solid-state polymerization may be, for example, 180°C or higher, 190°C or higher, 200°C or higher, or 205°C or higher, and may be 260°C or lower, 240°C or lower, 220°C or lower, or 215°C or lower. As a specific example, the solid-state polymerization may be carried out at a temperature of 200°C to 220°C. In addition, the pressure during the solid-state polymerization may be, for example, 10.0 Torr or less, 5.0 Torr or less, 2.0 Torr or less, or 1.0 Torr or less, and may be 0.01 Torr or more, 0.1 Torr or more, 0.2 Torr or more, or 0.5 Torr or more. Specifically, it may be 0.2 Torr to 2.0 Torr. In addition, the solid-state polymerization may be carried out in an inert gas atmosphere such as nitrogen.

The polyester resin according to the present invention may be prepared as a copolymerized polyester resin by further adding an additional diacid component in addition to the recycled bis(2-hydroxyethyl) terephthalate. The additional diacid component may be a dicarboxylic acid or a derivative thereof. The dicarboxylic acid may comprise at least one selected from terephthalic acid and isophthalic acid. For example, a dicarboxylic acid or a derivative thereof may be additionally added during the first polycondensation reaction.

In addition, the polycondensation reaction may be carried out in the presence of a polycondensation catalyst. The polycondensation catalyst may be selected for use from a group consisting of a titanium-based compound, a germanium-based compound, an antimony-based compound, and an aluminum-based compound. The amount of the polycondensation catalyst used is preferably 0.1 ppm to 500 ppm based on the amount of metal elements relative to the weight of a final polyester resin. Since the amount used has an impact on the color of the final polyester resin, the amount used may vary depending on the desired color and the stabilizer and colorant used.

In addition to the polycondensation catalyst, a stabilizer, a colorant, a crystallizing agent, an antioxidant, a branching agent, or the like may be further used. The timing of adding these additives is not particularly limited, and they may be added at any time during the preparation step of the polyester resin.

As the stabilizer, phosphorus-based compounds such as phosphoric acid, trimethyl phosphate, triethyl phosphate, and triethyl phosphonoacetate may be generally used. The amount thereof added may be such that 10 to 200 ppm relative to the weight of the polyester resin based on the amount of elements. In addition, common colorants such as cobalt acetate and cobalt propionate may be exemplified as the colorant added to enhance the color of the polyester resin. The amount thereof added may be such that 10 to 200 ppm relative to the weight of the polyester resin based on the amount of cobalt element. If necessary, anthraquinone-based compounds, perinone-based compounds, azo-based compounds, methine-based compounds, or the like may be used as an organic colorant. Commercially available toners such as Polysynthren Blue RLS from Clarient or Solvaperm Red BB from Clarient may be used. The amount of the organic compound colorant added may be adjusted to 0 to 50 ppm based on the weight of the polyester resin. A crystal nucleating agent, an ultraviolet absorber, a polyolefin resin, a polyamide resin, and the like may be exemplified as the crystallizing agent. Hindered phenol-based antioxidants, phosphite-based antioxidants, thioether-based antioxidants, or mixtures thereof may be exemplified as the antioxidant. Conventional branching agents having three or more functional groups, for example, trimellitic anhydride, trimethylol propane, trimellitic acid, or mixtures thereof may be exemplified as the branching agent.

**Preparation of a polyester film**

Thereafter, the polyester resin is melt-extruded and stretched to prepare a polyester film. In an embodiment, the polyester film may be prepared by biaxially stretching the polyester resin. Specifically, the polyester film may be prepared by melt-extruding the polyester resin to produce an unstretched polyester film comprising a resin layer formed from the polyester resin; and biaxially stretching the unstretched polyester film at a temperature equal to, or higher than, the glass transition temperature of the polyester resin.

In the step of producing an unstretched polyester film, the thermal decomposition of the polymer can be minimized by melt-extruding the polyester resin. Specifically, the step of producing an unstretched polyester film may be carried out at a temperature of 265°C to 300°C. If the melt extrusion temperature is lower than 265°C, the polymer may not be melted. If it exceeds 300°C, the thermal decomposition of the polymer increases, and the film may be damaged or broken during stretch molding, making it difficult to achieve the desired physical properties. The unstretched polyester film may be cooled to an appropriate temperature. Thereafter, the unstretched polyester film may be stretched at a temperature equal to, or higher than, the glass transition temperature of the polyester resin.

The stretching step of the unstretched polyester film is carried out at a temperature of 80°C to 200°C, whereby the unstretched polyester film can be stretched at a high stretching ratio. Specifically, for biaxial stretching, the unstretched polyester film may be stretched 2 to 6 times, specifically 2 to 5 times, in the longitudinal direction and 2 to 6 times, specifically 2 to 5 times, in the transverse direction.

After the biaxial stretching of the unstretched polyester film, a heat setting step may be further carried out in order to provide dimensional stability to the biaxially stretched polyester film thus obtained. The heat setting step may be carried out at a temperature of 160°C to 240°C for 1 second to 60 seconds.

**Mode for the Invention**

Hereinafter, the present invention will be described in more detail with reference to embodiments. However, these examples are provided only for illustration purposes, and the present invention is not limited thereto.

**Example 1**

**Step 1: Preparation of recycled bis(2-hydroxyethyl) terephthalate**

A first reactor made of stainless steel (SUS) was charged with 2,000 g of a waste polyester resin pulverized to a particle size of 4 mm or less, 4,000 g of ethylene glycol, and 7.0 g of zinc acetate anhydride. The temperature inside the reactor was raised to 180°C, and depolymerization (first glycolysis reaction) was carried out for 2 hours. The reactant (first reactant) thus obtained was transferred to a second reactor and cooled to 150°C. 2,000 g of ethylene glycol was further added thereto, and depolymerization (second glycolysis reaction) was carried out for 2 hours while the reactor temperature was maintained at 150°C.

The reactant (second reactant) thus obtained was cooled to 120°C through reduced pressure flash, and 16 g of a filter aid was added thereto, followed by pressurized filtration to carry out solid-liquid separation. The separated liquid reactant was passed through a column filled with an ion-exchange resin (BC107(H) of Bonlite) to remove ionic impurities to obtain a mixture (third reactant) containing bis(2-hydroxyethyl) terephthalate and ethylene glycol.

The mixture (third reactant) was transferred to a 10-liter distillation apparatus, and vacuum distillation was carried out at 130°C to recover unreacted ethylene glycol. The reactant (fourth reactant) from which ethylene glycol had been removed was subjected to thin film evaporation at 220°C and 0.08 Torr in a thin film evaporator (VKL70-4S of VTA) to obtain 1,040 g of a product from which dimers or higher oligomers had been removed.

Thereafter, for adsorption-crystallization, 1,040 g of the above product and 3,120 g of distilled water were charged to a 20-liter glass reactor, dissolved at a temperature of 70°C, and then 5.2 g of activated carbon was added thereto, followed by stirring for 30 minutes and filtration thereof. The filtrate was cooled to room temperature for the crystallization thereof, filtered, and dried in a vacuum oven. As a result, 1,980 g of a final product containing recycled bis(2-hydroxyethyl) terephthalate was obtained.

**Step 2: Preparation of a solution of recycled bis(2-hydroxyethyl) terephthalate**

1,980 g of recycled bis(2-hydroxyethyl) terephthalate (r-BHET), 312 g of water, and 483 g of ethylene glycol (EG) were homogeneously mixed at 70°C to prepare an r-BHET solution (concentration: 71.4% by weight).

**Step 3: Polycondensation reaction under a low vacuum**

A 7-liter reactor capable of a reaction under vacuum was charged with 2,775 g of the solution of recycled bis(2-hydroxyethyl) terephthalate (r-BHET) prepared above, 0.8 g of antimony trioxide as a catalyst, 0.6 g of triethyl phosphate as a stabilizer, and 0.4 g of cobalt acetate as a coloring agent. The temperature of the reactor was raised to 190°C over 2 hours. When the temperature reached 190°C, the pressure of the reactor was reduced from normal pressure to 200 Torr (absolute pressure: 200 mmHg) over 30 minutes. A polycondensation reaction under a low vacuum was carried out for 1 hour while the pressure of the reactor was maintained at 200 Torr (absolute pressure: 200 mmHg).

**Step 4: Polycondensation reaction under a high vacuum**

The pressure of the reactor was reduced from 200 Torr (absolute pressure: 200 mmHg) to 5 Torr (absolute pressure: 5 mmHg) over 30 minutes. At the same time, the temperature of the reactor was raised to 280°C over 1 hour, and a polycondensation reaction under a high vacuum was carried out while the pressure of the reactor was maintained at 1 Torr (absolute pressure: 1 mmHg) or less. At the beginning of the polycondensation reaction under a high vacuum, the stirring speed may be set high. As the polycondensation reaction under a high vacuum proceeds, when the stirring power is weakened due to the increase in the viscosity of the reactants or the temperature of the reactants rises above the set temperature, the stirring speed may be appropriately adjusted accordingly. The polycondensation reaction under a high vacuum was carried out until the intrinsic viscosity (IV) of the mixture (melt) in the reactor reached 0.64 dl/g. When the intrinsic viscosity of the mixture in the reactor reached the desired level, the mixture was then discharged to the outside of the reactor to form strands, which were solidified with a cooling liquid and then granulated to have an average weight of about 12 to 14 mg to prepare a polyester resin.

**Example 2**

A polyester resin was prepared by the same procedure as in Example 1, except that, in step 2, 1,980 g of recycled bis(2-hydroxyethyl) terephthalate (r-BHET) and 312 g of water were homogeneously mixed at 70°C to prepare an r-BHET solution (concentration: 86.4% by weight).

**Example 3**

A polyester resin was prepared by the same procedure as in Example 1, except that the polycondensation reaction under a low vacuum in step 3 was not carried out, while the polycondensation reaction under a high vacuum in step 4 was carried out.

**Example 4**

A polyester resin was prepared by the same procedure as in Example 1, except that, in step 1, the first glycolysis reaction was carried out at 180°C for 1 hour.

**Example 5**

A polyester resin was prepared by the same procedure as in Example 1, except that, in step 1, 2,000 g of a waste fiber was used as a waste polyester raw material.

**Example 6**

A polyester resin was prepared by the same procedure as in Example 1, except that, in step 1, 2,000 g of a waste banner was used as a waste polyester raw material.

**Example 7**

A polyester resin was prepared by the same procedure as in Example 1, except that, in step 1, no adsorption-crystallization was carried out after the thin-film evaporation.

**Comparative Example 1**

A reactor made of stainless steel (SUS) was charged with 2,000 g of a waste polyester resin, 8,000 g of ethylene glycol, and 7.0 g of zinc acetate anhydride. The temperature inside the reactor was raised to 196°C, and depolymerization (glycolysis reaction) was carried out for 4 hours. The reactant thus obtained was cooled to 30°C, and crystallization of bis(2-hydroxyethyl) terephthalate was carried out for 2 hours. The slurry of bis(2-hydroxyethyl) terephthalate and ethylene glycol thus obtained was subjected to solid-liquid separation in a centrifugal separator. Bis(2-hydroxyethyl) terephthalate obtained through centrifugation was washed twice with sufficient distilled water, and the residual solvent was removed in an oven to obtain about 2,020 g of a final product containing bis(2-hydroxyethyl) terephthalate.

The bis(2-hydroxyethyl) terephthalate thus obtained was used to prepare a polyester resin in the same manner as in Example 1.

**Comparative Example 2**

A polyester resin was prepared by the same procedure as in Comparative Example 1, except that, in step 1, the depolymerization (glycolysis reaction) was carried out at 210°C.

**Comparative Example 3**

A polyester resin was prepared by the same procedure as in Comparative Example 1, except that, in step 1, the depolymerization (glycolysis reaction) was carried out at 196°C, and no adsorption-crystallization was carried out.

**Comparative Example 4**

A 5-kg batch reactor was charged with terephthalic acid (2,161.9 g), ethylene glycol (1,050 g), 0.8 g of antimony trioxide as a catalyst, 0.6 g of triethyl phosphate as a stabilizer, and 0.4 g of cobalt acetate as a colorant. After charging of the raw materials, subsequently, nitrogen was injected into the reactor to make the reactor pressurized by 2.0 kgf/cm$^2$ higher than normal pressure. Then, the temperature of the reactor was raised to 250°C, and an esterification reaction was carried out at a temperature of 250°C while the mixture in the reactor was visually observed until the mixture became transparent. Upon completion of the esterification reaction, nitrogen in the pressurized reactor was released to the outside to lower the pressure in the reactor to normal pressure, and the mixture in the reactor was then transferred to a 7-liter reactor capable of a reaction under vacuum.

Then, the pressure of the reactor was reduced from normal pressure to 5 Torr (absolute pressure: 5 mmHg) over 30 minutes. At the same time, the temperature of the reactor was raised to 280°C, and a polycondensation reaction was carried out for 2 hours while the pressure of the reactor was maintained at 0.5 to 1 Torr. It was carried out until the intrinsic viscosity (IV) of the mixture (melt) in the reactor reached 0.64 dl/g. When the intrinsic viscosity reached the desired level, the mixture was then discharged to the outside of the reactor to form strands, which were solidified with a cooling liquid and then granulated to have an average weight of about 12 to 14 mg.

**Test Example 1: Evaluation of recycled bis(2-hydroxyethyl) terephthalate**

**1A. Analysis of r-BHET components - HPLC**

The components of recycled bis(2-hydroxyethyl) terephthalate (BHET) were analyzed by high-performance liquid chromatography (HPLC).

- About 0.01 g of a sample was diluted in about 20 ml of methanol and then measured by HPLC.
- Model: Waters e2695
- Column: C18 (4.6 $\times$ 250 mm), 5 $\mu$m
- UV detector: 242 nm
- Injection volume: 10 $\mu$l
- Eluent (gradient) A: $H_2O + H_3PO_4$, B: acetonitrile
- Measured components: bis(2-hydroxyethyl) terephthalate (BHET), mono(2-hydroxyethyl) terephthalic acid (MHET), 2-hydroxyethyl[2-(2-hydroxyethoxy)ethyl] terephthalate (DEG ester 1), bis[2-(2-hydroxyethoxy)ethyl]benzene-1,4-dicarboxylate (DEG ester 2), dimer, trimer, others

**2B. Residual solvents - GC**

The content of residual ethylene glycol (EG) in recycled bis(2-hydroxyethyl) terephthalate (BHET) was measured by gas chromatography (GC).

- About 0.1 g of a sample was diluted in about 10 ml of $CHCl_3$, treated with a filter of 0.45 $\mu$m, and then measured by GC.
- Model: Agilent 7890B
- Column: DB-624 (30 m $\times$ 0.25 mm $\times$ 1.4 $\mu$m)
- Oven Temp.: 60°C (2 min.) - 10°C/min. - 200°C (0 min.) - 20°C/min. - 260°C (5 min.)
- Injector temp.: 250°C
- Detector temp.: 250°C
- Flow: 1.5 ml/min. ($N_2$), split ratio: 1/50

### 1C. Melting temperature, glass transition temperature, and crystallization temperature - DSC

Differential scanning calorimetry (DSC, Q20 model, TA instrument) was used. Each sample was filled in an aluminum pan, heated up to 280°C at 10°C/minute, maintained at 280°C for 5 minutes, and then cooled down to 30°C at -300°C/minute. Subsequently, the glass transition temperature (Tg) and melting temperature (Tm) were obtained from the heat flow obtained when the temperature was raised to 280°C at 10°C/minute. Subsequently, it was maintained at 280°C for 5 minutes, and the temperature at the apex of the exothermic curve when the temperature was decreased to 30°C at -10°C/minute was taken as the cooling crystallization temperature (Tmc).

### 1D. Inorganic substances - ICP-AES

About 0.3 g of each sample was pretreated with ultrasonic waves and diluted with ultrapure water. Inorganic components were analyzed using inductively coupled plasma atomic emission spectroscopy (ICP-AES, 5100, Agilent) (detection limit: 5 ppm).

### Test Example 2: Evaluation of the polyester resins

### 2A. Melting point (Tm) - DSC

The melting point of each polyester resin was measured using DSC in the same manner as in 1C above.

### 2B. Intrinsic viscosity (IV)

Each polyester resin was dissolved at a concentration of 1.2 g/dl in orthochlorophenol (OCP) at 150°C to obtain a solution, and an Ubbelohde viscometer was used to measure intrinsic viscosity. Specifically, the temperature of the viscosity tube was maintained at 35°C, and the time (efflux time) required for the solvent to pass between specific internal sections of the viscosity tube and the time required for the solution to pass to obtain specific viscosity, which was used to calculate intrinsic viscosity.

### 2C. Content of DEG - GC

Each polyester resin was pulverized with a pulverizer, 2 g of the resin was subjected to aminolysis with hydrazine hydrate, and then the content of diethylene glycol (DEG) (% by weight) was measured by gas chromatography (GC).

### 2D. Concentration of carboxyl end groups

A glass container of a certain size was charged with a resin sample and benzyl alcohol as a solvent, which was heated and dissolved at 180°C. A small amount of phenol red as an indicator was added to the dissolved sample solution, and the color change of the solution was observed while a small amount of diluted sodium hydroxide solution was added. The concentration of -COOH end groups (E) was calculated from the input sample amount, concentration and input amount of the sodium hydroxide solution by the following equation (unit: eq/ton).

[Equation 1]

$$E = \frac{(S - B) \times N \times f}{W} \times 1{,}000$$

Here, S is the volume (L) of the 0.1 N sodium hydroxide-benzyl alcohol solution consumed in the titration of the polyester resin, B is the volume (L) of the 0.1 N sodium hydroxide-benzyl alcohol solution consumed in the blank titration, N is the concentration of the sodium hydroxide-benzyl alcohol solution, which is 0.1 N, W is the weight (kg) of the polyester resin used for titration, and f is a factor of the 0.1 N sodium hydroxide-benzyl alcohol solution, which is 0.95 to 0.99, specifically 0.97.

### 2E. Cyclic trimers - HPLC

A polyester resin was pulverized with a pulverizer to obtain a sample. 0.1 g of the sample was dissolved in 1 mL of 1,1,1,3,3,3-hexafluoro-2-propanol/chloroform = 2/3 (v/v). 3 ml of methanol was added thereto, which was vortexed to reprecipitate and treated with a 0.2-$\mu$m filter. The content of cyclic trimers was measured using high-performance liquid chromatography (HPLC).

**Test Example 3: Evaluation of the polyester films**

### 3A. Preparation of a polyester film

Each of the polyester resins prepared in the Examples and Comparative Examples was dried at 150°C for 6 hours in a nitrogen atmosphere to adjust the moisture content to 50 ppm or less.

The dried polyester resin was melt-extruded into a sheet form through a die at a temperature of 280°C, which was then rapidly cooled and solidified to prepare an unstretched film. Thereafter, the unstretched film was first stretched 3.6 times in the longitudinal direction (MD) at 100°C and then secondarily stretched 3.6 times in the transverse direction (TD) at 120°C. The stretched film was heat set at 230°C for 10 seconds to impart dimensional stability, thereby preparing a polyester film having a thickness of 50 $\mu$m.

### 3B. Tensile strength and elongation

A film sample was cut to at least 5 cm in length and 1.5 cm in width in the longitudinal direction (MD) and transverse direction (TD), mounted in the longitudinal direction on clips spaced apart by 5 cm in a universal testing machine (UTM 5566A, Instron), and elongated at 25°C and a tensile speed of 200 mm/minute according to ASTM D882 to obtain a stress-strain curve until fracture.

The strength at the point where the film sample broke was taken as the tensile strength, and the length stretched was taken as the elongation.

### 3C. Elongation retention rate (%) - MD, PCT conditions

Each film prepared was left for 96 hours under pressure cooker test conditions of 121°C, 100% relative humidity, and 2 atm, and the elongation was then measured in the longitudinal direction (MD). The elongation measurement method was the same as in section 3B above. The elongation retention rate (R) was calculated from the measured values by the following Equation 2.

$$[\text{Equation 2}]$$

$$R = \frac{S1}{S0} \times 100$$

Here, S0 is the initial elongation (%) of a polyester film sample, and S1 is the elongation (%) measured after the film sample is left for 96 hours at 121°C, 100%. R.H., and 2 atm.

### 3D. Evaluation of processibility

In the process of melt-extruding the polyester resin, a 10-$\mu$m filter was used, and the filter pressure applied in the process of removing foreign substances and unmelted gel-like resin was measured. The number of film breakages was measured for 24 hours during the stretching process of the polyester film to evaluate the processibility according to the following criteria.

- ○ (Very good): Filter pressure of 80 kg/cm$^2$ or less and 0 occurrence of breakage
- △ (Good): Filter pressure of 80 to 150 kg/cm$^2$ one occurrence of breakage
- × (Poor): Filter pressure of 150 kg/cm$^2$ or less and 2 occurrences of breakage or more

The results of the Test Examples are shown in the tables below.

[Table 1]

| | | | | Ex. 1 | Ex. 2 | Ex. 3 | Ex. 4 | Ex. 5 | Ex. 6 | Ex. 7 |
|---|---|---|---|---|---|---|---|---|---|---|
| rBHET | HPLC (area%) | | BHET | 98.21 | 98.21 | 98.21 | 98.20 | 97.84 | 96.58 | 96.76 |
| | | | MHET | 1.09 | 1.09 | 1.09 | 1.08 | 1.10 | 1.72 | 1.89 |
| | | | DEG-ester 1 | 0.44 | 0.44 | 0.44 | 0.43 | 0.62 | 0.61 | 0.80 |
| | | | DEG-ester 2 | 0.00 | 0.00 | 0.00 | 0.00 | 0.16 | 0.09 | 0.10 |
| | | | Dimer | 0.20 | 0.20 | 0.20 | 0.19 | 0.22 | 0.84 | 0.23 |
| | | | Trimer | 0.00 | 0.00 | 0.00 | 0.00 | 0.00 | 0.00 | 0.00 |
| | | | Others | 0.06 | 0.06 | 0.06 | 0.10 | 0.06 | 0.16 | 0.22 |
| | GC (% by weight) | | Residual EG | 0.07 | 0.07 | 0.07 | 0.07 | 0.08 | 0.07 | 0.23 |
| | DSC (°C) | | Tm | 112.2 | 112.2 | 112.2 | 111.9 | 112.1 | 111.5 | 112.5 |
| | ICP-AES (ppm) | | Zn | N.D. | N.D. | N.D. | N.D. | N.D. | N.D. | N.D. |
| | | | Sb | N.D. | N.D. | N.D. | N.D. | N.D. | N.D. | N.D. |
| | | | Fe | N.D. | N.D. | N.D. | N.D. | N.D. | N.D. | N.D. |
| | | | P | N.D. | N.D. | N.D. | N.D. | N.D. | N.D. | N.D. |
| | | | Mn | N.D. | N.D. | N.D. | N.D. | N.D. | N.D. | N.D. |
| | | | Mg | N.D. | N.D. | N.D. | N.D. | N.D. | N.D. | N.D. |
| | | | Al | N.D. | N.D. | N.D. | N.D. | N.D. | N.D. | N.D. |
| | | | Co | N.D. | N.D. | N.D. | N.D. | N.D. | N.D. | N.D. |
| | | | Na | N.D. | N.D. | N.D. | N.D. | N.D. | N.D. | N.D. |
| | | | K | N.D. | N.D. | N.D. | N.D. | N.D. | N.D. | N.D. |
| Resin | DSC | Tm (°C) | | 257.8 | 257.2 | 256.2 | 257.4 | 256.7 | 256.7 | 255.2 |
| | IV (dl/g) | | | 0.64 | 0.63 | 0.64 | 0.63 | 0.64 | 0.64 | 0.65 |
| | DEG (% by weight) | | | 0.6 | 0.7 | 0.8 | 0.7 | 0.8 | 0.8 | 0.8 |
| | -COOH end groups (eq/ton) | | | 14 | 17 | 20 | 15 | 15 | 16 | 18 |
| | Content of cyclic trimers (ppm) | | | 2,570 | 2,720 | 2,950 | 2,650 | 2,630 | 2,700 | 2,810 |
| Film | MD | Strength (kgf/mm$^2$) | | 15.5 | 15.7 | 15.0 | 15.3 | 15.2 | 15.2 | 15.1 |
| | | Elongation (%) | | 137 | 133 | 130 | 138 | 131 | 135 | 132 |
| | | Elongation retention rate (%) | | 54 | 52 | 42 | 45 | 48 | 45 | 43 |
| | TD | Strength (kgf/mm$^2$) | | 25.8 | 25.5 | 25.1 | 25.2 | 25.3 | 25.1 | 25.0 |
| | | Elongation (%) | | 87 | 83 | 80 | 81 | 82 | 82 | 85 |
| | Processability | | | ○ | ○ | ○ | ○ | ○ | ○ | ○ |

[Table 2]

| | | | | C. Ex. 1 | C. Ex. 2 | C. Ex. 3 | C. Ex. 4 |
|---|---|---|---|---|---|---|---|
| rBHET | HPLC (%) | | BHET | 82.55 | 84.58 | 90.68 | - |
| | | | MHET | 1.00 | 2.18 | 1.66 | - |
| | | | DEG-ester 1 | 3.67 | 5.35 | 2.88 | - |
| | | | DEG-ester 2 | 0.38 | 0.27 | 0.25 | - |
| | | | Dimer | 10.44 | 6.36 | 3.68 | - |
| | | | Trimer | 0.89 | 0.72 | 0.35 | - |
| | | | Others | 1.07 | 0.54 | 0.50 | - |
| | GC (% by weight) | | Residual EG | 0.41 | 0.45 | 0.33 | - |
| | DSC (°C) | | Tm | 110.5 | 108.5 | 111.1 | - |
| | ICP-AES (ppm) | | Zn | 80 | 50 | N.D. | - |
| | | | Sb | 5 | 8 | N.D. | - |
| | | | Fe | 11 | 7 | N.D. | - |
| | | | P | 22 | 23 | N.D. | - |
| | | | Mn | N.D. | N.D. | N.D. | - |
| | | | Mg | N.D. | N.D. | N.D. | - |
| | | | Al | N.D. | N.D. | N.D. | - |
| | | | Co | N.D. | N.D. | N.D. | - |
| | | | Na | N.D. | N.D. | N.D. | - |
| | | | K | N.D. | N.D. | N.D. | - |
| Resin | DSC (°C) | | Tm | 250.5 | 248.5 | 252.1 | 255.1 |
| | IV (dl/g) | | | 0.64 | 0.65 | 0.64 | 0.64 |
| | DEG (% by weight) | | | 3.4 | 4.5 | 2.0 | 1.2 |
| | -COOH end groups (eq/ton) | | | 21 | 24 | 20 | 35 |
| | Content of cyclic trimers (ppm) | | | 3,430 | 4,660 | 3,300 | 7,150 |
| Film | MD | | Strength (kgf/mm$^2$) | 12.2 | 11.0 | 13.8 | 14.8 |
| | | | Elongation (%) | 110 | 108 | 115 | 120 |
| | | | Elongation retention rate (%) | 34 | 27 | 38 | 22 |
| | TD | | Strength (kgf/mm$^2$) | 21.0 | 19.8 | 22.4 | 24.2 |
| | | | Elongation (%) | 58 | 58 | 62 | 78 |
| | Processability | | | × | × | Δ | Δ |

As can be seen from the above tables, in the recycled polyester resins of Examples 1 to 7, the content of cyclic trimers was 3,000 ppm or less, the content of diethylene glycol (DEG) and the concentration of carboxyl end groups were adjusted to certain levels or less, and the melting point was high. Processability when it was prepared into a film, strength, elongation, and elongation retention rate under high temperature and high humidity conditions were excellent.

In contrast, in the recycled polyester resins of Comparative Examples 1 to 3, the contents of cyclic trimers, diethylene glycol, and carboxyl end groups exceeded the desirable ranges, and the melting point was low. Processability when it was prepared into a film, strength, elongation, and elongation retention rate under high temperature and high humidity conditions were poor. In addition, Examples 1 to 7 showed equivalent or better properties as compared with the virgin polyester resin and its film of Comparative Example 4 that had not been subjected to a recycling process.

**Claims**

1. A polyester resin, which comprises recycled bis(2-hydroxyethyl) terephthalate obtained by the depolymerization of waste polyester, wherein the peak area fraction of a cyclic trimer measured by high-performance liquid chromatography (HPLC) is 3,000 ppm or less, and the content of diethylene glycol (DEG) measured by gas chromatography (GC) is 1.0% by weight or less.

2. The polyester resin of claim 1, wherein the polyester resin has a melting point of 255°C or higher when measured by differential scanning calorimetry (DSC).

3. The polyester resin of claim 1, wherein the polyester resin has an intrinsic viscosity (IV) at 35°C of 0.6 dl/g to 1.2 dl/g.

4. The polyester resin of claim 1, wherein the recycled bis(2-hydroxyethyl) terephthalate has a peak area fraction of oligomers of 3% or less in total when measured by high-performance liquid chromatography.

5. A polyester film, which comprises the polyester resin according to any one of claims 1 to 4.

6. The polyester film of claim 5, wherein, when the polyester film is cut to a width of 1.5 cm, mounted in the longitudinal direction on clips spaced apart by 5 cm, and tested at 25°C and a tensile speed of 200 mm/minute according to ASTM D882, the tensile strength in the longitudinal direction (MD) is 15 kgf/mm$^2$ or more, and the elongation in the longitudinal direction (MD) is 125% or more.

7. The polyester film of claim 5, wherein the polyester film has an elongation retention rate (R) of 40% or more as calculated by the following Equation (2):

$$R = \frac{S1}{S0} \times 100 \quad (2)$$

wherein S0 is the initial elongation (%) of a polyester film sample, S1 is the elongation (%) measured after being left for 96 hours at 121°C, 100%. R.H., and 2 atm, and the elongation is measured by cutting the polyester film to a width of 1.5 cm, mounting it in the longitudinal direction on clips spaced apart by 5 cm, and testing it at 25°C and a tensile speed of 200 mm/minute according to ASTM D882.

8. A process for preparing a polyester film, which comprises:

    (1) depolymerizing waste polyester to prepare recycled bis(2-hydroxyethyl) terephthalate;
    (2) mixing the recycled bis(2-hydroxyethyl) terephthalate with a solvent to prepare a solution of recycled bis(2-hydroxyethyl) terephthalate;
    (3) preparing a polyester resin through a polycondensation reaction using the recycled bis(2-hydroxyethyl) terephthalate solution; and
    (4) melt-extruding the polyester resin and stretching the extrudate,

    wherein, in the polyester resin, the peak area fraction of a cyclic trimer measured by high-performance liquid chromatography (HPLC) is 3,000 ppm or less, and the content of diethylene glycol (DEG) measured by gas chromatography (GC) is 1.0% by weight or less.

9. The process for preparing a polyester resin of claim 8, wherein the polycondensation reaction comprises (3a) subjecting the recycled bis(2-hydroxyethyl) terephthalate solution to a first polycondensation reaction under a pressure of 200 mmHg to 600 mmHg to prepare an oligomer.

10. The process for preparing a polyester resin of claim 9, wherein the polycondensation reaction comprises, after step (3a), (3b) subjecting the oligomer to a second polycondensation under a pressure of less than 200 mmHg to prepare a polyester resin.

## INTERNATIONAL SEARCH REPORT

| International application No. |
|---|
| **PCT/KR2024/004247** |

| | |
|---|---|
| **A. CLASSIFICATION OF SUBJECT MATTER** | |

C08G 63/183(2006.01)i; C08G 63/78(2006.01)i; C08J 11/10(2006.01)i; C08J 5/18(2006.01)i

According to International Patent Classification (IPC) or to both national classification and IPC

**B. FIELDS SEARCHED**

Minimum documentation searched (classification system followed by classification symbols)

C08G 63/183(2006.01); C07C 67/03(2006.01); C07C 69/82(2006.01); C08G 63/78(2006.01): C08G 63/89(2006.01); C08J 11/04(2006.01); C08J 11/10(2006.01); C08J 11/24(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 폐 폴리에스테르(waste polyester), 비스(2-히드록시에틸)테레프탈레이트(bis(2-hydroxyethyl)terephthalate), 환형 삼량체(cyclic trimer), 디에틸렌글리콜(diethylene glycol)

**C. DOCUMENTS CONSIDERED TO BE RELEVANT**

| Category* | Citation of document, with indication, where appropriate, of the relevant passages | Relevant to claim No. |
|---|---|---|
| X | KR 10-2011-0017184 A (WOONGJIN CHEMICAL CO., LTD.) 21 February 2011 (2011-02-21)<br>See paragraph [0005]; and claims 1 and 10. | 1-8 |
| Y | | 9-10 |
| Y | KR 10-2003-0019630 A (AIES CO., LTD.) 06 March 2003 (2003-03-06)<br>See example 1. | 9-10 |
| A | JP 2003-055300 A (IS KK) 26 February 2003 (2003-02-26)<br>See entire document. | 1-10 |
| A | KR 10-2007-0090225 A (ASAHI KASEI CHEMICALS CORPORATION) 05 September 2007 (2007-09-05)<br>See entire document. | 1-10 |

| ✓ Further documents are listed in the continuation of Box C. | ✓ See patent family annex. |
|---|---|

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **01 July 2024** | **01 July 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2024/004247**

**C.    DOCUMENTS CONSIDERED TO BE RELEVANT**

| Category* | Citation of document, with indication, where appropriate, of the relevant passages | Relevant to claim No. |
|---|---|---|
| A | KR 10-2011-0099484 A (WOONGJIN CHEMICAL CO., LTD.) 08 September 2011 (2011-09-08)<br>See entire document. | 1-10 |

Form PCT/ISA/210 (second sheet) (July 2022)

## INTERNATIONAL SEARCH REPORT
### Information on patent family members

| International application No. |
| --- |
| **PCT/KR2024/004247** |

| Patent document cited in search report | | | Publication date (day/month/year) | Patent family member(s) | | | Publication date (day/month/year) |
| --- | --- | --- | --- | --- | --- | --- | --- |
| KR | 10-2011-0017184 | A | 21 February 2011 | KR | 10-1296226 | B1 | 13 August 2013 |
| KR | 10-2003-0019630 | A | 06 March 2003 | CN | 1454202 | A | 05 November 2003 |
| | | | | EP | 1306364 | A1 | 02 May 2003 |
| | | | | EP | 1306364 | A4 | 31 March 2004 |
| | | | | KR | 10-0722161 | B1 | 28 May 2007 |
| | | | | US | 7030264 | B1 | 18 April 2006 |
| | | | | WO | 02-10117 | A1 | 07 February 2002 |
| JP | 2003-055300 | A | 26 February 2003 | None | | | |
| KR | 10-2007-0090225 | A | 05 September 2007 | CN | 101068848 | A | 07 November 2007 |
| | | | | CN | 101068848 | B | 25 August 2010 |
| | | | | CN | 101068854 | A | 07 November 2007 |
| | | | | CN | 101068854 | B | 08 June 2011 |
| | | | | CN | 101068855 | A | 07 November 2007 |
| | | | | CN | 101068855 | B | 11 May 2011 |
| | | | | CN | 101084256 | A | 05 December 2007 |
| | | | | CN | 101084256 | B | 17 November 2010 |
| | | | | EP | 1818352 | A1 | 15 August 2007 |
| | | | | EP | 1818352 | A4 | 21 December 2011 |
| | | | | EP | 1820816 | A1 | 22 August 2007 |
| | | | | EP | 1829912 | A1 | 05 September 2007 |
| | | | | EP | 1829912 | A4 | 25 July 2012 |
| | | | | EP | 1829914 | A1 | 05 September 2007 |
| | | | | JP | 4276267 | B2 | 10 June 2009 |
| | | | | JP | 4726143 | B2 | 20 July 2011 |
| | | | | JP | 4744450 | B2 | 10 August 2011 |
| | | | | JP | 5219113 | B2 | 26 June 2013 |
| | | | | KR | 10-0857502 | B1 | 08 September 2008 |
| | | | | KR | 10-0866356 | B1 | 31 October 2008 |
| | | | | KR | 10-0882010 | B1 | 04 February 2009 |
| | | | | KR | 10-0895634 | B1 | 07 May 2009 |
| | | | | KR | 10-2007-0050985 | A | 16 May 2007 |
| | | | | KR | 10-2007-0072587 | A | 04 July 2007 |
| | | | | KR | 10-2007-0088710 | A | 29 August 2007 |
| | | | | US | 2008-0090975 | A1 | 17 April 2008 |
| | | | | US | 2008-0128949 | A1 | 05 June 2008 |
| | | | | US | 2008-0146685 | A1 | 19 June 2008 |
| | | | | US | 2008-0260979 | A1 | 23 October 2008 |
| | | | | US | 2011-0301304 | A1 | 08 December 2011 |
| | | | | US | 7807728 | B2 | 05 October 2010 |
| | | | | US | 8202591 | B2 | 19 June 2012 |
| | | | | US | 8293162 | B2 | 23 October 2012 |
| | | | | WO | 2006-059536 | A1 | 05 June 2008 |
| | | | | WO | 2006-059536 | A1 | 08 June 2006 |
| | | | | WO | 2006-059605 | A1 | 05 June 2008 |
| | | | | WO | 2006-059605 | A1 | 08 June 2006 |
| | | | | WO | 2006-059608 | A1 | 07 August 2008 |
| | | | | WO | 2006-059608 | A1 | 08 June 2006 |
| | | | | WO | 2006-068093 | A1 | 12 June 2008 |
| | | | | WO | 2006-068093 | A1 | 29 June 2006 |
| KR | 10-2011-0099484 | A | 08 September 2011 | KR | 10-1269949 | B1 | 31 May 2013 |

Form PCT/ISA/210 (patent family annex) (July 2022)

## INTERNATIONAL SEARCH REPORT
### Information on patent family members

International application No.

**PCT/KR2024/004247**

| Patent document cited in search report | Publication date (day/month/year) | Patent family member(s) | Publication date (day/month/year) |
|---|---|---|---|
| | | | |

Form PCT/ISA/210 (patent family annex) (July 2022)

## REFERENCES CITED IN THE DESCRIPTION

**Patent documents cited in the description**

- KR 1386683

- US 7211193 B

**Non-patent literature cited in the description**

- *CHEMICAL ABSTRACTS*, 65133-69-9

- *CHEMICAL ABSTRACTS*, 26850-76-0